# EUROPÄISCHE PATENTSCHRIFT

(11) **EP 2 196 300 B1**
(45) Veröffentlichungstag und Bekanntmachung des Hinweises auf die Patenterteilung: **13.09.2017**
(21) Anmeldenummer: 09176595.8
(22) Anmeldetag: 20.11.2009
(51) Int. Cl.: B29C 49/78, B29C 49/06

(54) **Verfahren und Vorrichtung zur ökonomischen Herstellung von Kunststoffbehältern**
Method and manufacture for economical production of plastic containers
Procédé et dispositif de fabrication économique de récipients en plastique

(30) Priorität: 10.12.2008 DE 102008061492
(43) Veröffentlichungstag der Anmeldung: 16.06.2010
(73) Patentinhaber: Krones AG, 93073 Neutraubling (DE)
(72) Erfinder: Geltinger, Florian, 84088 Neufahrn (DE); Finger, Dieter, 93073 Neutraubling (DE); Brunner, Andreas, 93089 Aufhausen (DE)
(74) Vertreter: Reichert & Lindner Partnerschaft Patentanwälte

(56) Entgegenhaltungen:
- WO-A2-2006/024462
- DE-A1- 4 340 291
- DE-A1-102004 014 653
- DE-A1-102004 044 260
- US-B2- 7 320 586

## Beschreibung

Die vorliegende Erfindung betrifft ein Verfahren zur ökonomischen Herstellung von Behältern aus thermoplastischem Kunststoff.

Ferner betrifft die Erfindung eine Vorrichtung zur ökonomischen Herstellung von Behältern aus thermoplastischem Kunststoff. Hierzu ist eine Blasmaschine vorgesehen, die mehrere Blasformen für die Ausbildung der Behälter umfasst. Es ist mindestens eine erste Druckkammer vorgesehen, die einen ersten Druck zur Verfügung stellt. Ferner ist mindestens eine zweite Druckkammer vorgesehen, die einen zweiten Druck zur Verfügung stellt. Dabei ist der Druck in der ersten Druckkammer kleiner als der Druck in der zweiten Druckkammer. Die Luft in der ersten Druckkammer dient zum Vorblasen der Behälter. Die Luft in der zweiten Druckkammer dient zum Fertigblasen der Behälter, wobei eine Entlüftung, zumindest teilweise, der fertig geblasenen Behälter in die erste Druckkammer hinein erfolgt. Aus der ersten Druckkammer heraus sind ein Vorblasen und weitere Blasschritte der Behälter möglich.

Eine Blasmaschine, mit der die Behälter aus thermoplastischem Kunststoff hergestellt werden, ist bereits häufig im Stand der Technik beschrieben worden, so dass in der nachfolgenden Beschreibung auf die detaillierte Ausgestaltung der Blasmaschine nicht mehr eingegangen werden muss. Für das Herstellen der Behälter aus thermoplastischem Kunststoff wird ein Vorformling verwendet, der mit Überdruck im Innern einer Blasform vorgeblasen, bzw. auskonturiert, wird. Die Blasform selbst umfasst dabei mindestens zwei Formenträgerhälften, die um eine gemeinsame Achse drehbar gelagert sind. Durch das Drehen des Blasrades um eine Achse werden die Formenträgerhälften verschlossen und der Blasvorgang bzw. das Auskonturieren der Behälter an einem bestimmten Punkt innerhalb der Drehbewegung des Blasrades gestartet. Die Ausgestaltung eines solchen Formenträgers ist z. B. in der europäischen Patentschrift EP 1 276 589 B1 offenbart.
Gemäß der deutschen Offenlegungsschrift DE 10 2004 044 260 A1 sind verschiedene Kessel vorgesehen, mit denen ein Vorratsvolumen für die jeweiligen Drücke bereitgestellt wird. Unter Verwendung von Ventilen erfolgt eine gesteuerte Druckgaszuführung. Die Ventile sind an eine Steuerung angeschlossen, die die jeweiligen Schaltzeiten der Ventile koordiniert.

Die europäische Patentanmeldung EP 0 754 537 A1 offenbart die Möglichkeit der Wiederverwendung des Arbeitsfluids bei einer Streckblasmaschine. Bei einer Streckblasmaschine werden verschiedene Arbeitseinheiten pneumatisch betätigt. Es sind ein Hochdruck-Blaslufttank zum Ausdehnen des besagten Vorformlings und ein Arbeitslufttank zum Betätigen besagter verschiedener Arbeitseinheiten vorgesehen. Der Abluftkreislauf der Blasformen ist mit dem Arbeitslufttank verbunden. Somit kann ein Teil der benutzten Blasluft mit dem Arbeitslufttank für das Betätigen der verschiedenen Arbeitseinheiten verwendet werden.

Die deutsche Offenlegungsschrift DE 43 402 90 A1 offenbart die Mehrfachnutzung von Arbeitsluft. Dabei wird bei einer Vorrichtung mindestens ein Bauelement pneumatisch betätigt. Die Betätigung erfolgt mit Hauptarbeitsluft, die dem pneumatischen Bauelement aus einer Arbeitslufthauptversorgung zugeführt wird. Zusätzlich zur Arbeitslufthauptversorgung ist mindestens eine Arbeitsluftnebenversorgung verwendet, die mit einem geringeren Druckniveau als die Arbeitslufthauptversorgung versehen ist. Nach der Durchführung einer Arbeitsoperation eines pneumatischen Bauelements mit einer Druckluftversorgung aus der Arbeitsluftversorgung wird während einer Übergangsphase eine Entlüftung in die Arbeitsluftnebenversorgung durchgeführt. Nach der Übergangsphase wird eine Entlüftung des ersten pneumatischen Bauelements gegenüber einem Umgebungsdruck durchgeführt. Eine zweite pneumatische Arbeitsoperation wird aus der Arbeitsluftnebenversorgung gespeist.

Die deutsche Offenlegungsschrift DE 43 402 91 A1 offenbart ebenfalls die Mehrfachnutzung von Blasluft. Die Blasluft dient dabei zur Formung eines Behälters aus thermoplastischem Kunststoff. Nach einer Temperierung wird ein Vorformling einer Blasstation zugeführt, die eine Blasform aufweist, die zur Konturgebung des Behälters vorgegeben ist. In die Blasform wird der temperierte Vorformling eingesetzt. Durch Zuführung von Hochdruckblasluft wird der Vorformling aufgeweitet. Es wird zusätzlich mindestens ein weiterer pneumatischer Arbeitsschritt mit Niederdruckluft durchgeführt, die einer Niederdruckluftversorgung entnommen wird. Die Niederdruckluftversorgung weist ein geringeres Druckniveau als die Hochdruckblasluftversorgung auf. Nach einer Expansion des Vorformlings wird aus dem in der Blasform gehaltenen geformten Behälter ausströmende Hochdruckluft während einer Übergangsphase der Niederdruckluftversorgung zugeführt. Im Bereich der Niederdruckluftversorgung wird eine Drucküberwachung zur Begrenzung eines maximal bereitgestellten Niederluftdruckes durchgeführt. Nach einer Übergangsphase wird eine Entlüftung des in der Blasform gehaltenen Behälters gegenüber der Umgebungsluft durchgeführt.

Die deutsche Offenlegungsschrift DE 10 2004 014 653 A1 offenbart ein Verfahren und eine Vorrichtung zum Herstellen eines insbesondere wärmebeständigen Hohlkörpers. Der Hohlkörper wird aus einem erwärmten Vorformling aus thermoplastischem Kunststoff in einer konturierten Blasform ausgeformt. Das Ausformen erfolgt durch Einleiten eines ersten Mediums in den Vorformling, das in einem ersten Medienspeicher gespeichert ist und unter Druck steht. Dies bezeichnet man als Vorblasphase. Unter mehr oder minder gleichzeitigem Recken des Hohlkörpers und Einleiten eines zweiten Mediums in den Hohlkörper, das aus einem zweiten Medienspeicher gespeichert und dessen Druck höher als der Druck im ersten Medienspeicher ist, wird der Hohlkörper letztendlich fertig geblasen. Letztendlich wird ein drittes Medium, das in einem dritten Medienspeicher gespeichert ist, gekühlt in den fertig geblasenen Behälter eingeleitet. Dieser Prozess wird als Spülphase bezeichnet.

Das U.S.-Patent 7,320,586 B2 offenbart eine Vorrichtung zum Blasformen von Behältern. Die Behälter sind in bevorzugter Weise Flaschen, die aus einem Vorformling hergestellt werden, wobei Gas in die Behälter eingeleitet und das in den Behältern befindliche Gas wiedergewonnen wird. Die Vorrichtung umfasst dabei eine Einrichtung zur Verfügungsstellung des Gases unter einem ersten Druck und unter einem zweiten Druck. Ebenso ist eine für die Ausformung des Behälters vorgesehene Blasform zugeordnet. Die Einrichtung umfasst dabei ebenfalls Mittel zur Zurückgewinnung des Gases bis zum Erreichen eines vordefinierten Druckniveaus innerhalb des Behälters. Ferner sind Kontrollmittel vorgegeben, die die Rückgewinnungseinheit und die Anpasseinheit kontrollieren, damit die vorgegebenen Produktionsbedingungen eingehalten werden.

Die deutsche Offenlegungsschrift DE 31 119 25 A1 offenbart ein Verfahren und eine Vorrichtung zum Einsparen von Druckluft, insbesondere bei Thermoformmaschinen. Die Druckluft wird zur Beaufschlagung eines Formwerkzeugs verwendet. Die bisher nach Durchführung des Formvorgangs in die Atmosphäre abgeleitete Druckluft wird nunmehr stufenweise abgeleitet. Dabei wird derart verfahren, dass über eine geeignete Ventilsteuerung und entsprechende Leitungen die nach dem Formvorgang noch vorhandene Druckluft teilweise gespeichert und anschließend verschiedenen weiteren Verbrauchern zugeleitet wird. Durch diese Maßnahmen ist, bezogen auf die gesamte Thermoformmaschine, eine verhältnismäßig große Energieeinsparung erreichbar.

Die deutsche Patentschrift DE 10 2004 041 973 B3 offenbart das Luftrecycling im Blasformprozess. Es werden Behälter aus thermoplastischem Kunststoff hergestellt, bei dem ein erwärmter Vorformling durch Zuführung von Niederdruckblasluft aus einer Niederdruckluftversorgung vorgeblasen und durch anschließende Zuführung von Hochdruckblasluft fertig geblasen wird. Die aus dem fertig geblasenen Behälter strömende Hochdruckblasluft wird während einer Übergangsphase über eine Umschaltung der Niederdruckluftversorgung zugeführt. Im Bereich der Niederdruckluftversorgung ist eine Drucküberwachung vorgesehen. Nach der Übergangsphase erfolgt eine Entlüftung des Behälters gegenüber einem Umgebungsdruck. Eine Drucksteuerung der Niederdruckluftversorgung sorgt für eine Variation der Dauer der Übergangsphase.

Aufgabe der Erfindung ist, ein Verfahren zu schaffen, mit dem auf möglichst energiesparende Art und Weise die Herstellung von Behältern aus thermoplastischem Kunststoff möglich ist.

Die obige Aufgabe wird durch ein Verfahren gelöst, das die Merkmale des Anspruchs 1 umfasst.

Eine weitere Aufgabe der Erfindung ist, eine Vorrichtung zu schaffen, mit der auf ökonomische und Energie sparende Art und Weise die Herstellung eines Behälters aus thermoplastischem Kunststoff möglich ist.

Die obige Aufgabe wird gelöst durch eine Vorrichtung mit den Merkmalen des Anspruchs 8.

Das Verfahren zur ökonomischen Herstellung von Behältern aus thermoplastischem Kunststoff umfasst dabei das Einbringen eines Vorformlings in jeweils einen Formenträger einer Blasmaschine. Die Blasmaschine selbst umfasst mindestens eine erste Druckkammer und mindestens eine zweite Druckkammer, wobei die erste Druckkammer mit einem externen Verbraucher verbunden sein kann. Gemäß einer weiteren Ausführungsform der Erfindung umfasst die Blasmaschine eine erste Druckkammer, eine zweite Druckkammer und eine dritte Druckkammer, aus denen die für die verschiedenen Blasschritte benötigte Druckluft mit dem dafür notwendigen Druck entnommen werden kann. Die erste Druckkammer besitzt ein erstes Druckmaximum, das unter einem zweiten Druckmaximum der zweiten Druckkammer liegt, das wiederum unter einem dritten Druckmaximum der dritten Druckkammer liegt. Der externe Verbraucher ist dabei über einen Druckspeicher mit der ersten Druckkammer niederen Drucks verbunden, um Druckstöße auszugleichen. Als Druckspeicher kann sowohl ein Behälter als auch ein Schlauch oder dergleichen dienen.

Die folgende Beschreibung spricht der Einfachheit halber von mindestens einer ersten Druckkammer und von mindestens einer zweiten Druckkammer. Es ist für einen Fachmann selbstverständlich, dass das erfindungsgemäße Verfahren und die erfindungsgemäße Vorrichtung auch für mehr als zwei Druckkammern funktioniert und Anwendung findet. Zunächst wird ein erster Druck an den jeweiligen Vorformling im Formenträger angelegt, um den Vorformling vorzublasen. Für das Fertigblasen der Behälter wird ein zweiter Druck zugeführt, der der zweiten Druckkammer entnommen wird und größer ist als der erste Druck, der der ersten Druckkammer entnommen worden ist. Die Entlüftung der fertig geblasenen Behälter kann in die erste Druckkammer hinein erfolgen. Ebenso wird für das Vorblasen der Behälter der dafür erforderliche Druck bzw. Druckbereich aus der ersten Druckkammer heraus entnommen. Um das Recycling der Luft im zweiten Druckbereich der Behälter durchführen zu können, ist eine Regelung vorgesehen, die während des Vorblasens und der Entlüftung den Druck in der ersten Druckkammer im Wesentlichen konstant hält. Ebenso wird das Druckniveau im externen Druckspeicher entsprechend geregelt.

Die Regelung umfasst einen internen Regler, über den das Druckniveau in der ersten Druckkammer konstant gehalten wird. Dabei wird das erste Druckniveau in der Druckkammer niederen Drucks konstant gehalten, wobei die Dauer der Rückspeisung vom höheren zweiten Druckniveau zum niedrigeren Druckniveau geregelt wird.

Ferner umfasst die Regelung einen externen Regler, über den bei einer Unterschreitung eines vorbestimmten ersten Solldrucks in der ersten Druckkammer niederen Drucks eine Druckdifferenz zwischen dem Druckniveau im externen Druckspeicher und dem Druckniveau in der ersten Druckkammer niederen Drucks verringert oder ausgeglichen wird.

Eine vorbestimmte erste Druckdifferenz bei einer Unterschreitung des Istdrucks zu einem ersten Solldruck in der ersten Druckkammer niederen Drucks liegt bevorzugt zwischen 0,1 bar und 0,6 bar. Ebenso dient der externe Regler dazu, dass bei Überschreitung des Istdrucks zu einem zweiten Solldruck in der ersten Druckkammer niederen Drucks eine zweite Druckdifferenz des Istdrucks zu einem zweiten Solldruck in der ersten Druckkammer niederen Drucks verringert wird. Die vorbestimmte zweite Druckdifferenz liegt bevorzugt zwischen 0,5 bar und 0,9 bar.

Weiterhin wird durch die Regelung bei einer Unterschreitung des ersten Solldrucks um die erste Druckdifferenz gleichzeitig die Zeit der Entlüftung der Behälter in die erste Druckkammer verlängert. Ebenso kann diese Zeit bei einer Überschreitung des zweiten Solldrucks um die zweite Druckdifferenz verkleinert werden. Bevorzugt liegt eine Differenz vom ersten zum zweiten Solldruck unterhalb von 2 bar. Dabei ist es auch möglich, dass der erste und der zweite Solldruck zu einem Solldruck zusammengefasst werden.

Ferner ist die erste Druckkammer niederen Drucks mit einem Druckaufnehmer verbunden. Über einen zentralen Luftverteiler ist die erste Druckkammer niederen Drucks mit dem externen Druckspeicher verbunden. Der externe Druckspeicher ist über ein erstes Ventil mit einem ersten Verbraucher und über ein zweites Ventil mit einem zweiten Verbraucher verbunden. Der erste Verbraucher ist dabei ein Kompressor. Der zweite Verbraucher ist ein Schalldämpferpaket, durch das überschüssiger Druck an die Umgebung abgegeben wird. Ebenso ist es möglich, dass der erste Verbraucher ein weiteres System zur Herstellung und/oder Abfüllung von Behältern ist, bei dem die Druckluft aus der zweiten Druckkammer oder aus der ersten Druckkammer benötigt wird. Es ist von besonderer Bedeutung, dass eine einmal im System erzeugte Druckluft an anderen Stationen eines Druckluftsystems oder Verarbeitungssystems verwendet wird. Der externe Druckspeicher dient ebenfalls zum Abpuffern von Druckschlägen, die durch das System bei dem Formblasen und Überführen der Druckluft zu den einzelnen Druckkammern erzeugt werden.

Das in der ersten Druckkammer erforderliche Druckniveau wird über jeweils ein Domüberstromventil erzeugt, das über ein Proportionalventil angesteuert wird.

Die erfindungsgemäße Vorrichtung dient zur ökonomischen Herstellung von Behältern aus thermoplastischem Kunststoff mit einer Blasmaschine. An der Blasmaschine sind mehrere Blasformen zur Ausbildung der Behälter vorgesehen. Ebenso ist eine erste Druckkammer vorgesehen, die einen ersten Druck zur Verfügung stellt. Eine zweite Druckkammer ist vorgesehen, die einen zweiten Druck zur Verfügung stellt. Dabei ist der erste Druck kleiner als der zweite Druck. Die erste Druckkammer ist mit einem externen Druckspeicher verbunden. Die Luft in der ersten Druckkammer dient zum Vorblasen oder für die Verwendung von anderen Blasschritten der Behälter oder zum Ausleiten der Luft an einen externen Verbraucher. Obwohl sich die nachfolgende Beschreibung lediglich auf die Blasschritte des Vorblasens oder des Fertigblasens beschränkt, soll dies nicht als eine Beschränkung der Erfindung aufgefasst werden. Weitere Blasschritte, die mit Druckluft durchgeführt werden können, sind das Streckblasen, die Betätigung der Reckstange und/oder ein Zwischenblasschritt, der nach dem Vorblasen und vor dem Fertigblasen durchgeführt werden kann.

Die Luft in der zweiten Druckkammer höheren Drucks dient zum Fertigblasen der Behälter. Eine Entlüftung der fertig geblasenen Behälter ist in die ersten Druckkammer niederen Drucks hinein durchführbar. Das Vorblasen der Behälter erfolgt aus dieser ersten Druckkammer niederen Drucks oder einem weiteren Druckbereich niederen Drucks heraus. Es ist eine Regelung vorgesehen, die den Druck in der ersten Druckkammer niederen Drucks während des Vorblasens und den Druck während der Entlüftung in die erste Druckkammer niederen Drucks hinein im Wesentlichen konstant hält. Ebenso ist ein Druckniveau des ersten Druckspeichers oder des externen Verbrauchers in der Art regelbar, dass ein maximaler Blasmedienvolumenstrom von der ersten Druckkammer zum externen Verbraucher gewährleistet werden kann. Die Verbindung der ersten Druckkammer mit dem externen Verbraucher kann hierbei über einen Druckspeicher erfolgen.

Im Folgenden sollen Ausführungsbeispiele die Erfindung und ihre Vorteile anhand der beigefügten Figuren näher erläutern.
Figur 1 zeigt eine schematische Darstellung einer Blasmaschine, die mit einem Ofen verbunden ist, der der Blasmaschine die Vorformlinge mit einer definierten Temperatur zur Blasformung der Kunststoffbehälter zur Verfügung stellt.
Figur 2 zeigt eine schematische Darstellung der Blasmaschine mit einer ersten Druckkammer und einer zweiten Druckkammer und der für das Blasformen der Kunststoffbehälter notwendigen Druckzuführungen bzw. Abführungen.
Figur 3 zeigt eine schematische Darstellung einer weiteren Ausführungsform der Blasmaschine mit einer ersten Druckkammer, einer zweiten Druckkammer und einer dritten Druckkammer für das Blasformen der Kunststoffbehälter.
Figur 4 zeigt eine schematische Darstellung des Ablaufdiagramms der Drucksteuerung für die Blasformung der Kunststoffbehälter.
Figur 5 zeigt eine schematische Darstellung des Druckverlaufs beim Blasen eines thermoplastischen Kunststoffbehälters.
Figur 6 zeigt schematisch drei Druckbereiche und deren teilweise Überlagerung.

Die nachfolgende Beschreibung bezieht sich auf die Blasformung von thermoplastischen Kunststoffbehältern und die dafür erforderliche Druckluftzuführung zur Blasformung dieser Behälter. Die Verwendung von Luft für die Ausbildung der Kunststoffbehälter und die Verwendung eines bestimmten Drucks für das Vorblasen bzw. das Fertigblasen des Kunststoffbehälters ist eine von mehreren möglichen Ausführungsformen. Je nach Anforderung des herzustellenden Kunststoffbehälters bzw. der herzustellenden Kunststoffflasche sind andere Parameter zu wählen, um ein optimales Ergebnis für die hergestellten Kunststoffbehälter zu erhalten. Ferner sei darauf hingewiesen, dass in den verschiedenen Figuren für gleiche Elemente oder gleich wirkende Elemente das gleiche Bezugszeichen verwendet wird.

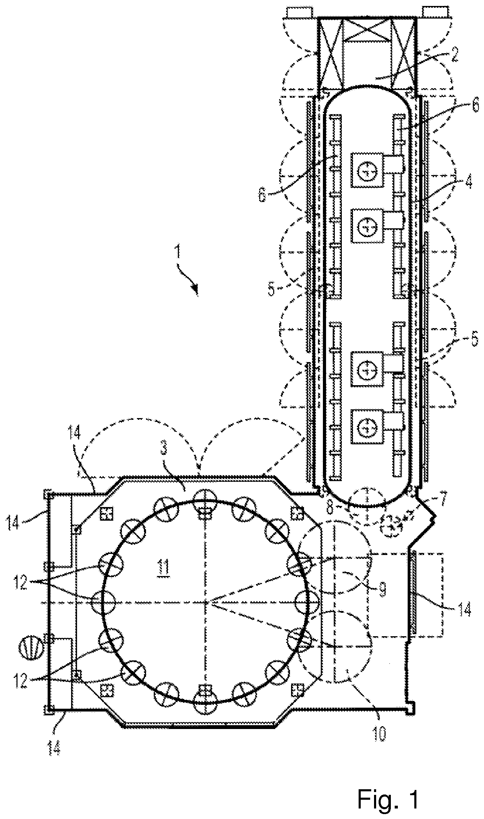

Figur 1 zeigt eine schematische Ansicht einer Vorrichtung, mit der thermoplastische Kunststoffbehälter im Wesentlichen durch ein Streckblasverfahren hergestellt werden. In der nachfolgenden Beschreibung wird der Begriff "Kunststoffflasche" als gleichbedeutend für den Begriff "Kunststoffbehälter" verwendet. Die Vorrichtung 1 besteht im Wesentlichen aus einem Ofen 2, in dem Vorformlinge (nicht dargestellt) für die herzustellenden Kunststoffflaschen auf eine bestimmte Temperatur gebracht werden, damit aus diesen Vorformlingen die Kunststoffflaschen im Blasverfahren bzw. Streckblasverfahren hergestellt werden können. Mit dem Ofen 2 ist eine Blasmaschine 3 verbunden. Im Ofen 2 ist eine Fördereinrichtung 4 vorgesehen, die eine Vielzahl von Vorformlingen an einer Heizeinrichtung 5 vorbeiführt. Zum Inneren des Ofens 2 hin ist die Transporteinrichtung 4 mittels Wärme reflektierenden Kacheln 6 abgeschirmt. An einer Übergabeposition 7 werden die Vorformlinge in den Ofen 2 eingeleitet. An einer Ausgabeposition 8 werden die erwärmten Vorformlinge an eine Eingabeposition 9 für die Blasmaschine 3 übergeben. An einer Ausgabeposition 10 der Blasmaschine werden die fertigen Kunststoffbehälter zu einer weiteren Bearbeitung bzw. zur Abfüllung (nicht dargestellt) ausgegeben.

In der in Figur 1 gezeigten Darstellung umfasst die Blasmaschine 3 eine Transporteinrichtung 11, an der die Vielzahl der Formenträger 12 angeordnet ist. In der hier gezeigten schematischen Darstellung der Blasmaschine 3 ist die Transporteinrichtung 11 als Rad ausgebildet. Es ist ebenso denkbar, dass die Transporteinrichtung als im Wesentlichen lineare Transporteinrichtung ausgebildet ist. Die Blasmaschine 3 ist von mehreren Wänden eingehaust.

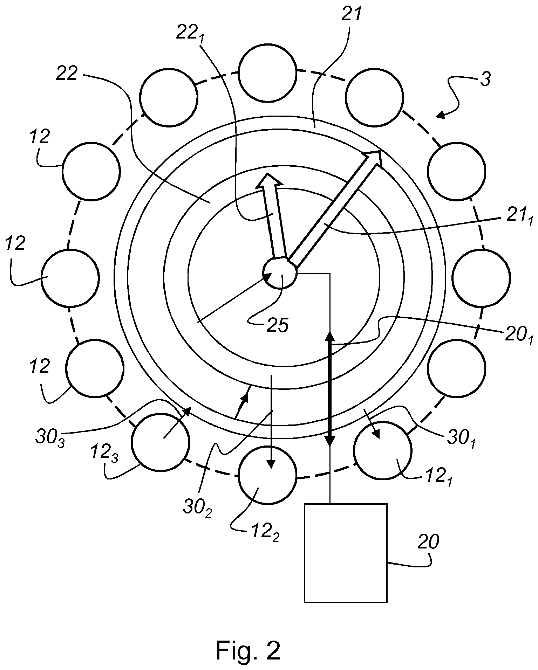

Figur 2 zeigt schematisch denjenigen Teil der Blasmaschine 3, mit dem unbenutzte Blas-/Spülluft aus der Blasmaschine heraus in einen Verbraucher, wie z. B. einen Kompressor, geführt werden kann. Es ist für einen Fachmann selbstverständlich, dass jede Art von Verbraucher denkbar ist. Außerhalb der Blasmaschine 3 ist eine externe Einheit 20 angeordnet. Die Blasmaschine 3 umfasst eine erste Druckkammer 21 und eine zweite Druckkammer 22. Ebenso ist eine zentrale Druckluftversorgung 25 vorgesehen, die über die externe Einheit 20 entsprechend mit der erforderlichen Druckluft versehen wird. Von der zentralen Druckluftversorgung 25 aus wird über eine Leitung 21₁ die erste Druckkammer 21 mit der erforderlichen Druckluft versorgt. Ebenso wird über eine zweite Leitung 22₁ die zweite Druckkammer 22 mit der entsprechenden Druckluft versorgt. Der Druck in der ersten Druckkammer 21 ist kleiner als der Druck in der zweiten Druckkammer 22.

Ebenso ist in Figur 2 der Ablauf eines Blasvorgangs eines Kunststoffbehälters dargestellt, wobei die verschiedenen Pfeile die Richtungen des Druckluftflusses während des Blasvorgangs darstellen. Der Blasvorgang wird in der nachfolgenden Beschreibung anhand von drei aufeinander folgenden Formenträgern 12₁, 12₂ und 12₃ beschrieben. Dies soll jedoch nicht als eine Beschränkung der Erfindung aufgefasst werden. Es ist für einen Fachmann selbstverständlich, dass sich der Blasvorgang während der Drehung des Blasrades 3 über mehr als drei Positionen der Formenträger 12 erstrecken kann. Wie bereits oben dargestellt, erfolgt die Versorgung mit Druckluft der zentralen Druckluftversorgung 25 über die externe Einheit. Die Druckluftversorgung ist durch den Doppelpfeil 20₁ gekennzeichnet. In der ersten Druckkammer 21 stellt sich somit ein Druckniveau ein, das kleiner ist als das Druckniveau in der zweiten Druckkammer 22. Von der ersten Druckkammer 21 gelangt die für das Vorblasen der Kunststoffbehälter erforderliche Druckluft zu dem Formenträger 12₁. Der Weg der Druckluft ist in Figur 2 schematisch durch den Pfeil 30₁ dargestellt. Im weiteren Blasvorgang erfolgt dann das Fertigblasen der Kunststoffbehälter, welches aus der zweiten Druckkammer 22 gespeist wird. Die Druckluftversorgung des entsprechenden Formenträgers 12₂ ist in Figur 2 durch den Pfeil 30₂ dargestellt. Letztendlich erfolgt die Absenkung des Druckniveaus in der Flasche für das Fertigblasen auf ein Druckniveau, welches im Wesentlichen dem Druckniveau in der ersten Druckkammer 21 entspricht. Die aus diesem Prozess überschüssige Druckluft wird, wie in Figur 2 dargestellt, mit dem Pfeil 30₃ von dem Behälter zur ersten Druckkammer 21 geleitet. Sollte der Druck im ersten Druckniveau 21 einen bestimmten Bereich über- bzw. unterschreiten, so wird die erste Druckkammer 21 in die Hauptdruckluftversorgung 25 hinein belüftet, welche letztendlich mit der externen Einheit 20 in Verbindung steht, die die überschüssige Luft abnimmt bzw. einen in der ersten Druckkammer 21 erforderlichen Druck bzw. ein erforderliches Druckniveau einstellt. Wie aus der Darstellung der Figur 2 zu entnehmen ist, ist die erste Druckkammer 21 und die zweite Druckkammer 22 jeweils als Ringkanal ausgebildet, über den an die jeweils für den Blasvorgang benötigten Formenträger 12 der erforderliche Druck angelegt werden kann. Das Druckniveau in der externen Einheit 20 ist dabei so zu wählen, dass ein maximaler Durchfluss zwischen der ersten Druckkammer 21 und der externen Einheit 20 entsteht (hoher Druckunterschied), gleichzeitig aber auch ein mit einem Druckabfall in der ersten Druckkammer 21 einhergehendes Leersaugen der ersten Druckkammer 21 verhindert wird.

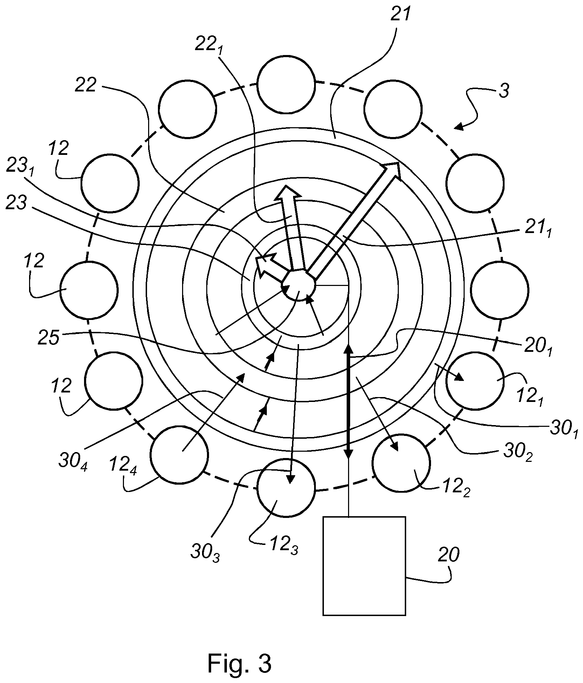

Figur 3 zeigt eine schematische Darstellung einer zweiten Ausführungsform der Vorrichtung zur ökonomischen Herstellung von Kunststoffbehältern. Es ist eine erste Druckkammer 21, eine zweite Druckkammer 22 und eine dritte Druckkammer 23 vorgesehen, aus denen die für die verschiedenen Blasschritte benötigte Druckluft entnommen wird. Die erste Druckkammer 21 besitzt ein erstes Druckmaximum, das unter einem zweiten Druckmaximum der zweiten Druckkammer 22 liegt. Die dritte Druckkammer 23 besitzt ein Druckmaximum, das über dem Druckmaximum der zweiten Druckkammer 22 liegt. Da drei Druckkammern 21, 22 und 23 vorliegen, wird der Blasvorgang anhand von vier aufeinander folgenden Formenträgern 12₁, 12₂ 12₃ und 12₄ beschrieben. Die Versorgung mit Druckluft der zentralen Druckluftversorgung 25 erfolgt über die externe Einheit 20. Von der zentralen Druckluftversorgung 25 aus wird die Druckluft mit dem entsprechenden Druckniveau über eine erste Leitung 21₁ in die erste Druckkammer 21 geleitet. Ebenso ist die zweite Druckkammer 22 mit einer zweiten Leitung 21₂ mit der zentralen Druckluftversorgung 25 verbunden. Entsprechend ist die dritte Druckkammer 23 mit einer dritten Leitung 21₃ mit der zentralen Druckluftversorgung 25 verbunden. Aus der ersten Druckkammer 21, der zweiten Druckkammer 22 und der dritten Druckkammer 23 heraus wird die für den jeweiligen Blasvorgang erforderliche Druckluft an die Formenträger 12₁, 12₂, 12₃ oder 12₄ geliefert. Eine Entlüftung von einer Druckkammer in diejenige Druckkammer mit dem geringeren Druckniveau ist denkbar. Bevorzugt findet bei dieser Ausführungsform das Vorblasen des Behälters aus der ersten Druckkammer 21 statt, danach kann ein Zwischenblasen aus der zweiten Druckkammer 22 erfolgen, worauf aus der dritten Druckkammer 23 das Fertigblasen des Behälters stattfindet. Nach dem Fertigblasen wird der überschüssige Druck des Behälters, der unter anderem auch durch ein Spülen der Flasche entstehen kann, in eine Druckkammer niedrigeren Drucks, bevorzugt in die zweite Druckkammer 22 hinein entlüftet. Dies ist über den Pfeil 30₄ dargestellt. Über die Verbindung 21₁ wird diese Luft der externen Einheit 20 wieder zugeführt. Die Verbindung 21₁ besteht hierbei aus zwei Leitungen, wobei aus der ersten die zentrale Druckluftversorgung 25 von der externen Einheit, wie beispielsweise einem Kompressor, versorgt wird und in einer zweiten Leitung die für die Blasmaschine überschüssige Luft aus einer Druckkammer 21 oder 22 niederen Drucks nach außen zu der externen Einheit 20 geleitet wird, wo diese überschüssige Luft wieder zum Druckaufbau für die zentrale Luftversorgung 25 verwendet werden kann. Es wäre auch denkbar, dass diese zweite Leitung nicht mit der externen Einheit 20 in Verbindung steht, sondern mit einem nicht gezeigten anderen externen Verbraucher.

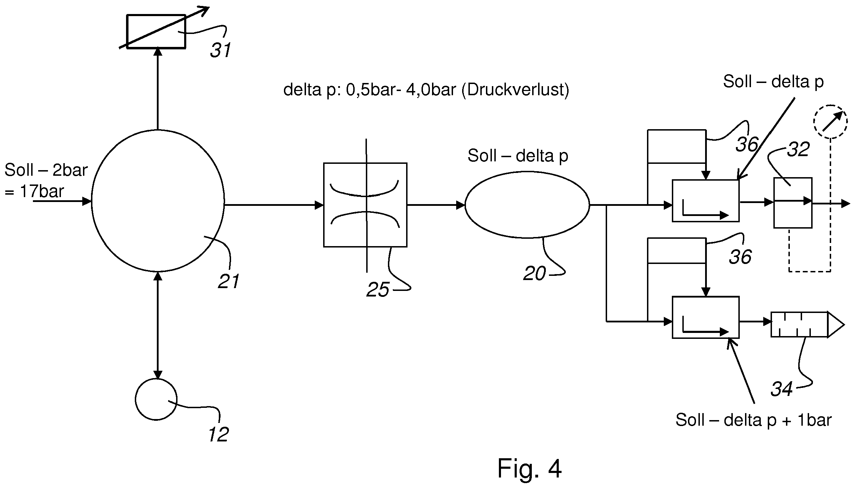

Figur 4 zeigt eine schematische Darstellung der erfindungsgemäßen Druckregelung für die erste oder zweite Druckkammer 21 oder 22. Dabei gilt es, wie bereits erwähnt, den Druck in der ersten Druckkammer 21 auf einem möglichst konstanten Niveau zu halten und dabei darauf zu achten, dass das Druckniveau im externen Druckspeicher bzw. der externen Einheit 20 derart eingestellt ist, dass ein maximaler Durchfluss entsteht, ohne dass mit einem Druckabfall bzw. mit einem möglichst geringen Druckabfall des Druckniveaus in der ersten Druckkammer 21 zu rechnen ist. Hierzu wird der Druck in der externen Einheit 20 durch Absenken eines externen Drucks oder durch Erhöhen des externen Drucks geregelt, so dass sich eine gewünschte Kurve in Bezug auf den Druckanstieg bzw. Druckabfall einstellt. Man steuert somit über die Regelung des Solldrucks in der externen Einheit den Blasmedienvolumenstrom. Wie bereits erwähnt, ist die erste Druckkammer 21 mit einer zentralen Luftverteilung bzw. Druckversorgung 25 verbunden. Ebenso besteht eine Verbindung von der ersten Druckkammer 21 zu den Formenträgern 12, in denen die Kunststoffbehälter konturiert werden. Ebenso ist mit der ersten Druckkammer 21 ein Druckaufnehmer 31 verbunden, der den Druck in der ersten Druckkammer 21 misst. Ebenso ist in Figur 4 angedeutet, dass der Solldruck in der ersten Druckkammer 21 um weniger als 2 bar schwanken soll. Somit ergibt sich ein Druckniveau in der ersten Druckkammer 21 von ca. 17 bar. Über die zentrale Luftverteilung 25 ist die erste Druckkammer 21 mit der externen Druckeinheit 20 bzw. dem externen Druckspeicher verbunden. Wie bereits in der Beschreibung zu Figur 2, Figur 3 und Figur 4 erwähnt, erfolgt die gesamte Blasluftversorgung über den zentralen Luftkanal 25. Für das Rückspeisen der Luft zur externen Einheit 20 wird kein zusätzliches Ventil für die Formenträger 12 benötigt. Die Luft wird direkt aus der zentralen Druckluftversorgungsleitung 25 abgeleitet. Von dem externen Druckspeicher 20 kann die Luft über einen künstlichen Verbraucher 32 abgeleitet werden. Zusätzlich zum künstlichen Verbraucher 32 ist ein Kompressor 34 vorgesehen, der eine konstante Abnahme der Luft aus dem externen Druckspeicher 20 gewährleistet. Die externe Einheit 20 bzw. der externe Druckspeicher besitzt ein gewisses Volumen, um die von der Blasmaschine 3 kommenden Druckpulsationen zu reduzieren. Das in der externen Einheit erforderliche Druckniveau wird über ein Domüberstromventil 36 erzeugt, das über ein Proportionalventil angesteuert wird. Die Proportionalventile sitzen somit vor dem künstlichen Verbraucher 32 bzw. dem Kompressor 34.

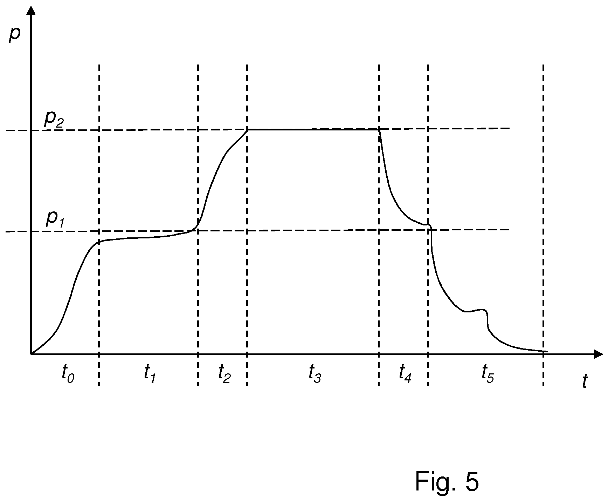

Figur 5 zeigt schematisch den Verlauf des Drucks p als Funktion der Zeit t für das Ausformen eines thermoplastischen Kunststoffbehälters mittels eines Streckblasvorgangs. Bei diesem Steckblasvorgang wird eine erste Druckkammer 21 und eine zweite Druckkammer 22 verwendet. Zunächst erfolgt das Vorblasen des Kunststoffbehälters für eine gewisse Zeit t₁. Während dieser Zeit t₁ wird ein Druck p₁ eingestellt. Letztendlich ist eine gewisse Zeit t₀ erforderlich, um das Druckniveau p₁ für das Vorblasen der Behälter zu erreichen. Ausgehend von dem Druckniveau p₁ für das Vorblasen ist eine gewisse Zeit t₂ erforderlich, um das Druckniveau p₂ zu erreichen und um das Fertigblasen der thermoplastischen Kunststoffbehälter durchzuführen. Das Druckniveau p₂ wird dabei für eine gewisse Zeit t₃ aufrechterhalten. Nach Abschluss der Zeit t₃ wird der Spülvorgang vom erhöhten Druckniveau p₂ zum geringeren Druckniveau p₁ eingeleitet. Dieser Spülvorgang beansprucht eine Zeit t₄. Anschließend wird für eine gewisse Zeit t₅ die noch im fertig geblasenen Behälter befindliche Luft nach außen an die Umgebung abgegeben. Um eine ausreichende Druckluftversorgung für das Vorblasen, d. h. das Druckniveau p₁, zu erhalten bzw. einen entsprechenden Abfluss der Druckluft vom Druckniveau p₂ zum Druckniveau p₁ für den Spülvorgang der fertig geblasenen Kunststoffbehälter zu erhalten, ist es erforderlich, eine bestimmte Regelung vorzusehen, damit ein ausreichender Druckluftdurchfluss eingestellt wird, damit ein Leersaugen der ersten Druckkammer 21 vermieden wird. Gemäß der Erfindung ist folglich ein interner Regler (schneller Regelkreis) vorgesehen. Diese Regelung versucht, den eingestellten Druck p₁ in der ersten Druckkammer 21 zu halten. Dies geschieht z. B. durch eine Vergrößerung oder Verkleinerung der Dauer t₄ für die Spülung vom zweiten Druckniveau p₂ in das erste Druckniveau p₁, mit anderen Worten für die Spülung aus der zweiten Druckkammer 22 in die erste Druckkammer 21 hinein. Ferner ist ein externer Regler (langsamer Regelkreis) vorgesehen, der den Ist-Druck in der ersten Druckkammer 21 gemäß den erforderlichen Parametern einstellt. Ist der Ist-Druck in der ersten Druckkammer 21 im Bereich zwischen 0,1 bar und 0,6 bar vom Solldruck aus gerechnet, wird die Druckdifferenz (Delta P), bei 0 bar beginnend, zwischen dem Druckniveau im externen Speicher 20 und dem Druckniveau in der ersten Druckkammer 21 langsam erhöht. Gleichzeitig vergrößert der interne Regler die Dauer t₄ bzw. den Recyclingwinkel, mit dem die Druckluft von der zweiten Druckkammer 22 zu der ersten Druckkammer 21 gelangt. Erhöht sich die Druckdifferenz zwischen dem Istdruck und dem Solldruck in der ersten Druckkammer 21 auf einen Bereich von 0,5 bar bis etwa 0,9 bar, was einen Druckabfall bedeutet, wird die Druckdifferenz (Delta P) zwischen dem externen Druckspeicher 20 und der ersten Druckkammer 21 wieder verkleinert. Bei einem Stopp bzw. einem Neustart der Blasmaschine 3 greift die Regelung dabei auf die letzten Regelparameter zurück, wodurch die Einschwingzeit reduziert wird. Durch ein Verändern der Parameter, wie z. B. den Druck in der ersten Druckkammer 21, werden die Regelparameter zurückgesetzt.

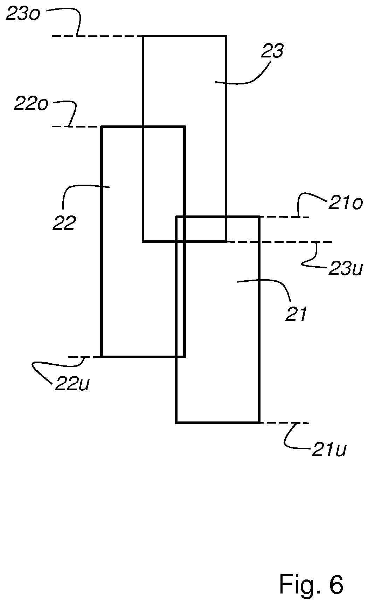

Figur 6 zeigt die Überlappung des ersten Druckbereichs in der ersten Druckkammer 21, des zweiten Druckbereichs in der zweiten Druckkammer 22 und des dritten Druckbereichs in der dritten Druckkammer 23. Der erste Druckbereich der ersten Druckkammer 21 hat ein oberes Druckniveau 21o und ein unteres Druckniveau 21u. Das obere Druckniveau 21o des ersten Druckbereichs der ersten Druckkammer 21 ist derart hoch gelegen, dass es in den dritten Druckbereich der dritten Druckkammer 23 hineinragt. Ebenso ragt das untere Druckniveau 22u des zweiten Druckbereichs der zweiten Druckkammer 22 in den ersten Druckbereich der ersten Druckkammer 21 hinein. Das obere Druckniveau 22o des zweiten Druckbereichs der zweiten Druckkammer 22 ragt in den dritten Druckbereich hinein und liegt über dem oberen Druckniveau 21o des ersten Druckbereichs der ersten Druckkammer 21.

Die Erfindung wurde unter Bezugnahme auf bevorzugte Ausführungsbeispiele beschrieben. Es ist für einen Fachmann selbstverständlich, dass Änderungen und Abwandlungen durchgeführt werden können, ohne dabei den Schutzbereich der nachstehenden Ansprüche zu verlassen.

## Patentansprüche

1. Verfahren zur ökonomischen Herstellung von Behältern aus thermoplastischem Kunststoff, mit den folgenden Schritten:
• Zuführen jeweils eines Vorformlings jeweils einem Formenträger (12) einer Blasmaschine (3), die mindestens eine Druckkammer (21) niederen Drucks und mindestens eine Druckkammer (22) höheren Drucks aufweist, wobei in der Druckkammer (21) niederen Drucks ein Druck vorherrscht, der kleiner oder gleich dem Druck in der Druckkammer (22) höheren Drucks ist;
• Anlegen mindestens eines ersten Drucks an den jeweiligen Vorformling im Formenträger (12) zum Vorblasen der Behälter;
• Fertigblasen der Behälter mit mindestens einem zweiten Druck, der über die Druckkammer (22) höheren Drucks zur Verfügung gestellt wird und größer ist als der erste Druck;
• zumindest teilweises Entlüften der fertig geblasenen Behälter in die Druckkammer (21) niederen Drucks hinein und Vorblasen und/oder Durchführen weiterer Blasschritte zur Fertigung der Behälter aus der Druckkammer (21) niederen Drucks heraus;
• wobei eine Regelung vorgesehen ist, durch die während des Vorblasens und/oder des Durchführens der weiteren Blasschritte und des Entlüftens, der Druck in der Druckkammer (21) niederen Drucks im Wesentlichen konstant gehalten wird,
**dadurch gekennzeichnet, dass**
ein Absenken oder Erhöhen eines Druckniveaus eines externen Druckspeichers (20) so geregelt wird, dass sich eine gewünschte Kurve in Bezug auf den Druckanstieg bzw. Druckabfall einstellt, so dass über einen Solldruck im externen Druckspeicher (20) ein maximaler Blasmedienvolumenstrom von der Druckkammer (21) niederen Drucks zum externen Druckspeicher (20) steuerbar ist, wodurch der Druck in der Druckkammer (21) niederen Drucks auf einem möglichst konstanten Niveau gehalten wird.

2. Verfahren nach Anspruch 1, **dadurch gekennzeichnet, dass** die Regelung einen internen Regler umfasst, durch den das Druckniveau in der Druckkammer (21) niederen Drucks konstant gehalten wird, wobei die Dauer der Rückspeisung vom höheren Druckniveau zum niedrigeren Druckniveau geregelt wird.

3. Verfahren nach Anspruch 1, **dadurch gekennzeichnet, dass** die Regelung einen externen Regler umfasst, über den bei einer Unterschreitung eines vorbestimmten ersten Solldrucks in der Druckkammer (21) niederen Drucks eine Druckdifferenz zwischen dem Druckniveau im externen Druckspeicher (20) und dem Druckniveau in der Druckkammer (21) mit niederen Druck (21) verringert wird.

4. Verfahren nach Anspruch 1, **dadurch gekennzeichnet, dass** die Regelung einen externen Regler umfasst, über den bei einer Überschreitung eines vorbestimmten zweiten Solldrucks in der Druckkammer (21) niederen Drucks eine Druckdifferenz zwischen dem Druckniveau im externen Druckspeicher (20) und dem Druckniveau in der Druckkammer (21) niederen Drucks vergrößert wird.

5. Verfahren nach einem der Ansprüche 1 bis 4, **dadurch gekennzeichnet, dass** die Druckkammer (21) niederen Drucks über einen zentralen Luftverteiler (25) mit dem externen Druckspeicher (20) verbunden wird, wobei der externe Druckspeicher (20) über jeweils ein Ventil (36) mit einem künstlichen Verbraucher (32) und jeweils ein Ventil (36) mit einem Kompressor (34) verbunden wird.

6. Verfahren nach einem der Ansprüche 1 bis 5, **dadurch gekennzeichnet, dass** die Druckkammer (21) niederen Drucks mit einem externen Druckspeicher (20) verbunden ist.

7. Verfahren nach einem der Ansprüche 1 bis 6, **dadurch gekennzeichnet, dass** eine erste Druckkammer (21) niederen Drucks, eine zweite Druckkammer (22) niederen Drucks und eine dritte Druckkammer (23) höheren Drucks vorgesehen werden, aus denen die für die verschiedenen Blasschritte benötigte Druckluft entnommen wird, wobei die erste Druckkammer (21) niederen Drucks ein erstes Druckmaximum besitzt, das unter einem zweiten Druckmaximum der zweiten Druckkammer (22) niederen Drucks liegt, das wiederum unter einem dritten Druckmaximum der dritten Druckkammer (23) höheren Drucks liegt.

8. Vorrichtung zur ökonomischen Herstellung von Behältern aus thermoplastischem Kunststoff mit einer Blasmaschine (3), die mehrere Blasformen (12) für die Ausbildung der Behälter umfasst, wobei mindestens eine erste Druckkammer (21) vorgesehen ist, die einen ersten Druckbereich zur Verfügung stellt, und mindestens eine zweite Druckkammer (22) vorgesehen ist, die einen zweiten Druckbereich zur Verfügung stellt, wobei der erste Druckbereich ein kleineres Druckmaximum aufweist als der zweite Druckbereich, die Luft in der ersten Druckkammer (21) für das Vorblasen oder weitere Blasschritte der Behälter dient, und die Luft in der zweiten Druckkammer (22) für das Fertigblasen der Behälter dient, wobei eine Entlüftung der fertig geblasenen Behälter, zumindest zum Teil, in die erste Druckkammer (21) hinein durchführbar ist und das Vorblasen und weitere Blasschritte der Behälter aus dieser ersten Druckkammer (21) heraus durchführbar sind, wobei eine Regelung vorgesehen ist, die den Druck in der ersten Druckkammer (21) während des Vorblasens und den Druck während der Entlüftung in die erste Druckkammer (21) hinein im Wesentlichen konstant hält, **dadurch gekennzeichnet, dass** im Rahmen der genannten Regelung ein Druckniveau eines mit der ersten Druckkammer (21) verbundenen externen Druckspeichers (20) so regelbar ist, dass sich eine gewünschte Kurve in Bezug auf den Druckanstieg bzw. Druckabfall einstellt, so dass über einen Solldruck im externen Druckspeicher (20) ein maximaler Blasmedienvolumenstrom von der ersten Druckkammer (21) zum externen Druckspeicher (20) steuerbar ist, wodurch der Druck in der ersten Druckkammer (21) auf einem möglichst konstanten Niveau gehalten wird.

9. Vorrichtung nach Anspruch 8, **dadurch gekennzeichnet, dass** die Regelung einen internen Regler umfasst, durch den ein konstantes Druckniveau der ersten Druckkammer (21) einstellbar ist, wobei die Dauer der Rückspeisung von der zweiten Druckkammer (22) zur ersten Druckkammer (21) regelbar ist.

10. Vorrichtung nach Anspruch 8, **dadurch gekennzeichnet, dass** die Regelung einen externen Regler umfasst, über den bei einer Unterschreitung eines vorbestimmten Solldrucks in der ersten Druckkammer (21), bezogen auf einen Solldruck, diese Druckdifferenz zwischen dem Druckniveau im externen Druckspeicher (20) und dem Druckniveau in der ersten Druckkammer (21) ausgleichbar ist.

11. Vorrichtung nach Anspruch 8, **dadurch gekennzeichnet, dass** die Regelung einen externen Regler umfasst, über den bei einer Überschreitung eines vorbestimmten ersten Solldrucks in der ersten Druckkammer (21) eine Druckdifferenz zwischen dem Druckniveau im externen Druckspeicher (20) und dem Druckniveau in der ersten Druckkammer (21) ausgleichbar ist.

12. Vorrichtung nach einem der Ansprüche 8 bis 11, **dadurch gekennzeichnet, dass** die mindestens erste Druckkammer (21) über einen zentralen Luftverteiler (25) mit dem externen Verbraucher (20) verbunden ist, wobei der externe Druckspeicher (20) über jeweils ein Ventil (36) mit einem künstlichen Verbraucher (32) und jeweils ein Ventil (36) mit einem Kompressor (34) verbunden ist.

13. Vorrichtung nach Anspruch 12, **dadurch gekennzeichnet, dass** die Ventile (36) als Domüberstromventile ausgebildet sind, wobei ein Proportionalventil die Domüberstromventile ansteuert.

14. Vorrichtung nach einem der Ansprüche 8 bis 13, **dadurch gekennzeichnet, dass** eine erste Druckkammer (21), eine zweite Druckkammer (22) und eine dritte Druckkammer (23) vorgesehen sind, aus denen die für die verschiedenen Blasschritte benötigte Druckluft entnehmbar ist und wobei die erste Druckkammer (21) ein erstes Druckmaximum besitzt, das unter einem zweiten Druckmaximum der zweiten Druckkammer (22) liegt, das wiederum unter einem dritten Druckmaximum der dritten Druckkammer (23) liegt.

## Claims

1. A method for the economic production of containers made of thermoplastic material with the following steps:
• supplying in each case one preform to a mold carrier (12) of a blow-molding machine (3), which comprises at least one pressure chamber (21) of lower pressure and at least one pressure chamber (22) of higher pressure, wherein in the pressure chamber (21) of lower pressure a pressure prevails, which is less than or equal to the pressure in the pressure chamber (22) of higher pressure;
• applying at least a first pressure to the respective preform in the mold carrier (12) for pre-blowing the containers;
• final blowing of the containers carried out with at least a second pressure, which is provided by way of the pressure chamber (22) of higher pressure and which is greater than the first pressure;
• at least partial venting of the finished blow-molded containers into the pressure chamber (21) of lower pressure, and pre-blowing and/or carrying out further blowing steps for manufacturing the containers from the chamber (21) of lower pressure;
• wherein a control is provided, by means of which the pressure in the pressure chamber (21) of lower pressure is kept substantially constant during the pre-blowing and/or other blowing steps and the venting, **characterized in that**
a lowering or raising of the pressure level of an external pressure accumulator (20) is regulated in such a way that a desired curve regarding the increase of the pressure and the decrease of the pressure respectively is achieved, so that a maximum volumetric flow of blowing agent from the pressure chamber (21) of lower pressure to the external pressure accumulator (20) is controllable by a target pressure in the external pressure accumulator (20), whereby the pressure in the pressure chamber (21) of lower pressure is kept to a level as constant as possible.

2. The method according to claim 1, wherein the control comprises an internal controller, by means of which the pressure level in the pressure chamber (21) of lower pressure is kept constant, the duration of the refeeding from the higher pressure level to the lower pressure level being regulated.

3. The method according to claim 1, wherein the control comprises an external controller, by means of which, when the pressure in the pressure chamber (21) of lower pressure falls below a predetermined first target pressure, a pressure difference between the pressure level in the external pressure accumulator (20) and the pressure level in the pressure chamber (21) of lower pressure is reduced.

4. The method according to claim 1, wherein the control comprises an external controller, by means of which, when the pressure in the pressure chamber (21) of lower pressure exceeds a predetermined second target pressure, a pressure difference between the pressure level in the external pressure accumulator (20) and the pressure level in the pressure chamber (21) of lower pressure, is increased.

5. The method according to any one of the claims 1 to 4, wherein the pressure chamber (21) of lower pressure is connected by a central air distributor (25) to the external pressure accumulator (20), wherein the external pressure accumulator (20) is connected to an artificial consumer (32) by a valve (36) and to a compressor (34) by a valve (36) each.

6. The method according to any one of the claims 1 to 5, wherein the pressure chamber (21) of lower pressure is connected to an external pressure accumulator (20).

7. The method according to any one of the claims 1 to 6, wherein a first pressure chamber (21) of lower pressure, a second pressure chamber (22) of lower pressure and a third pressure chamber (23) of higher pressure are provided, from which the compressed air required for the various blowing steps is taken, wherein the first pressure chamber (21) of lower pressure has a first maximum pressure, which is below a second maximum pressure of the second pressure chamber (22) of lower pressure, which in turn is below a third maximum pressure of the third pressure chamber (23) of higher pressure.

8. A device for the economic production of containers made of thermoplastic material with a blow-molding machine (3) comprising a plurality of blow molds (12) for the formation of the containers, wherein at least a first pressure chamber (21) is provided, which provides a first pressure range, and at least a second pressure chamber (22) is provided, which provides a second pressure range, wherein the first pressure range has a maximum pressure, which is less than that of the second pressure range, the air in the first pressure chamber (21) serves for the pre-blowing or further blowing steps of the containers, and the air in the second pressure chamber (22) serves for the final blowing of the containers, wherein the finished blow-molded containers are vented, at least partly, into the first pressure chamber (21) and the pre-blowing and other blowing steps of the containers are feasible from this first pressure chamber (21), wherein a control is provided which keeps the pressure in the first pressure chamber (21) during the pre-blowing and the pressure during the venting into the first pressure chamber (21) substantially constant,
**characterized in that**
in the context of the said control a pressure level of an external pressure accumulator (20), which is connected to the first pressure chamber (21), is controllable in such a way, that a desired curve regarding the pressure increase and the pressure decrease respectively is achieved, so that a maximum volumetric flow of blowing agent from the first pressure chamber (21) to the external pressure accumulator (20) is controllable by a target pressure in the external pressure accumulator (20), as a result of which the pressure in the first pressure chamber (21) is kept to as constant a level as possible.

9. The device according to claim 8, wherein the control comprises an internal controller, by which a constant pressure level of the first pressure chamber (21) is adjustable, wherein the duration of the refeeding from the second pressure chamber (22) to the first pressure chamber (21) can be controlled.

10. The device according to claim 8, wherein the control comprises an external controller, by means of which, when the pressure in the first pressure chamber (21) falls below a predetermined target pressure, this pressure difference between the pressure level in the external pressure accumulator (20) and the pressure level in the first pressure chamber (21) can be equalized.

11. The device according to claim 8, wherein the control comprises an external controller, by means of which, when the pressure in the first pressure chamber (21) exceeds a predetermined first target pressure, a pressure difference between the pressure level in the external pressure accumulator (20) and the pressure level in the first pressure chamber (21) can be equalized.

12. The device according to any one of the claims 8 to 11, wherein the at least first pressure chamber (21) is connected to the external pressure accumulator (20) by a central air distributor (25), wherein the external pressure accumulator (20) is connected to an artificial consumer (32) by a valve (36) and to a compressor (34) by a valve (36).

13. The device according to claim 12, wherein the valves (36) are formed as dome overflow valves, wherein a proportional valve controls the dome overflow valves.

14. The device according to any one of the claims 8 to 13, wherein a first pressure chamber (21), a second pressure chamber (22) and a third pressure chamber (23) are provided, from which the compressed air required for the various blowing steps can be taken, and wherein the first pressure chamber (21) has a first maximum pressure, which is below a second maximum pressure of the second pressure chamber (22), which in turn is below a third maximum pressure of the third pressure chamber (23).

## Revendications

1. Procédé de fabrication économique de contenants en matière thermoplastique, avec les étapes suivantes:
• Introduction respective d'une préforme à un support de formes (12) d'une souffleuse (3) qui présente au moins une chambre de pression (21) à pression inférieure et au moins une chambre de pression (22) à pression supérieure, une pression, inférieure ou égale à la pression dans la chambre de pression (22) à pression supérieure, régnant dans la chambre de pression (21) à pression inférieure;
• Application d'au moins une première pression à la préforme correspondante dans le support de formes (12) pour le présoufflage des contenants;
• Soufflage final des contenants au moyen d'au moins une deuxième pression qui est fournie par le biais de la chambre de pression (22) à pression supérieure et qui est plus élevée que la première pression;
• Ventilation au moins partielle des contenants, dont le soufflage est terminé, à l'entrée dans la chambre de pression (21) à pression inférieure et présoufflage et/ou réalisation d'autres étapes de soufflage pour la fabrication des contenants sortant de la chambre de pression (21) à pression inférieure;
• une régulation étant prévue, laquelle permet pendant le présoufflage et/ou la réalisation des autres étapes de soufflage et de la ventilation, de maintenir la pression dans la chambre de pression (21) à pression inférieure à un niveau sensiblement constant,
**caractérisé en ce qu'**
une baisse ou une hausse d'un niveau de pression d'un accumulateur de pression externe (20) est régulée de telle sorte que s'établisse une courbe souhaitée en matière de hausse ou de baisse de pression, de telle sorte que par le biais d'une pression de consigne dans l'accumulateur de pression externe (20) un flux de fluides de soufflage maximal soit pilotable de la chambre de pression (21) à pression inférieure vers l'accumulateur de pression externe (20), ce qui maintient à un niveau le plus constant possible la pression dans la chambre de pression (21) à pression inférieure.

2. Procédé selon la revendication 1, **caractérisé en ce que** la régulation comprend un régulateur interne qui permet de maintenir à niveau constant la pression dans la chambre de pression (21) à pression inférieure, la durée de retour étant régulée du niveau de pression supérieur au niveau de pression inférieur.

3. Procédé selon la revendication 1, **caractérisé en ce que** la régulation comprend un régulateur externe qui permet, lorsque la pression descend en dessous d'une première pression de consigne prédéterminée dans la chambre de pression (21) de pression inférieure, de réduire une différence de pression entre le niveau de pression dans l'accumulateur de pression externe (20) et le niveau de pression dans la chambre de pression (21) à pression inférieure (21).

4. Procédé selon la revendication 1, **caractérisé en ce que** la régulation comprend un régulateur externe qui permet, lorsque la pression passe au-dessus d'une deuxième pression de consigne prédéterminée dans la chambre de pression (21) de pression inférieure, d'augmenter une différence de pression entre le niveau de pression dans l'accumulateur de pression externe (20) et le niveau de pression dans la chambre de pression (21) à pression inférieure.

5. Procédé selon l'une quelconque des revendications 1 à 4, **caractérisé en ce que** la chambre de pression (21) à pression inférieure est reliée à l'accumulateur de pression externe (20) par le biais d'un distributeur d'air central (25), l'accumulateur de pression externe (20) étant relié respectivement par une soupape (36) à un consommateur artificiel (32) et par une soupape (36) à un compresseur (34).

6. Procédé selon l'une quelconque des revendications 1 à 5, **caractérisé en ce que** la chambre de pression (21) à pression inférieure est reliée à un accumulateur de pression externe (20).

7. Procédé selon l'une quelconque des revendications 1 à 6, **caractérisé en ce qu'**une première chambre de pression (21) à pression inférieure, une deuxième chambre de pression (22) à pression inférieure et une troisième chambre de pression (23) à pression supérieure sont prévues, dont est extrait l'air sous pression nécessaire aux diverses étapes de soufflage, la première chambre de pression (21) à pression inférieure possédant une première pression maximale qui est inférieure à une deuxième pression maximale de la deuxième chambre de pression (22) à pression inférieure, laquelle pression est elle-même inférieure à une troisième pression maximale de la troisième chambre de pression (23) à pression supérieure.

8. Dispositif de fabrication économique de contenants en matière thermoplastique, doté d'une souffleuse (3) qui comprend plusieurs formes de soufflage (12) pour la formation des contenants, au moins une première chambre de pression (21) étant prévue, laquelle fournit une première plage de pression, et au moins une deuxième chambre de pression (22) étant prévue, laquelle fournit une deuxième plage de pression, la première plage de pression présentant une pression maximale inférieure à la deuxième plage de pression, l'air dans la première chambre de pression (21) servant au présoufflage ou autres étapes de soufflage des contenants, et l'air dans la deuxième chambre de pression (22) servant au soufflage final des contenants, une ventilation des contenants dont le soufflage est fini étant, au moins partiellement, réalisable à l'entrée dans la première chambre de pression (21) et le présoufflage et les autres étapes de soufflage des contenants étant réalisables à la sortie de cette première chambre de pression (21), étant prévue une régulation qui maintient à un niveau sensiblement constant la pression dans la première chambre de pression (21) au cours du présoufflage et la pression au cours de la ventilation à l'entrée dans la première chambre de pression (21),
**caractérisé en ce que**
dans le cadre de ladite régulation, un niveau de pression d'un accumulateur de pression externe (20) relié à la première chambre de pression (21) étant régulable de telle sorte que s'établisse une courbe souhaitée en matière de hausse ou de baisse de pression, de telle sorte que par le biais d'une pression de consigne dans l'accumulateur de pression externe (20) un flux de fluides de soufflage maximal soit pilotable de la première chambre de pression (21) vers l'accumulateur de pression externe (20), ce qui maintient à un niveau le plus constant possible la pression dans la première chambre de pression (21).

9. Dispositif selon la revendication 8, **caractérisé en ce que** la régulation comprend un régulateur interne, qui permet de régler un niveau de pression constant de la première chambre de pression (21), la durée du retour de la deuxième chambre de pression (22) à la première chambre de pression (21) étant régulable.

10. Dispositif selon la revendication 8, **caractérisé en ce que** la régulation comprend un régulateur externe qui permet, lorsque la pression descend en dessous d'une pression de consigne prédéterminée dans la première chambre de pression (21), de compenser, en fonction d'une pression de consigne, cette différence de pression entre le niveau de pression dans l'accumulateur de pression externe (20) et le niveau de pression dans la première chambre de pression (21).

11. Dispositif selon la revendication 8, **caractérisé en ce que** la régulation comprend un régulateur externe qui permet, lorsque la pression passe au-dessus d'une première pression de consigne prédéterminée dans la première chambre de pression (21), de compenser une différence de pression entre le niveau de pression dans l'accumulateur de pression externe (20) et le niveau de pression dans la première chambre de pression (21).

12. Dispositif selon l'une quelconque des revendications 8 à 11, **caractérisé en ce que** la première chambre de pression (21) est reliée à l'accumulateur de pression externe (20) par le biais d'un distributeur d'air central (25), l'accumulateur de pression externe (20) étant relié respectivement par une soupape (36) à un consommateur artificiel (32) et par une soupape (36) à un compresseur (34).

13. Dispositif selon la revendication 12, **caractérisé en ce que** les soupapes (36) sont conçues en tant que soupapes de décharge à calotte, une valve proportionnelle commandant les soupapes de décharge à calotte.

14. Dispositif selon l'une quelconque des revendications 8 à 13, **caractérisé en ce que** sont prévues une première chambre de pression (21), une deuxième chambre de pression (22) et une troisième chambre de pression (23), dont peut être extrait l'air sous pression nécessaire aux diverses étapes de soufflage, et la première chambre de pression (21) possédant une première pression maximale qui est inférieure à une deuxième pression maximale de la deuxième chambre de pression (22), laquelle pression est elle-même inférieure à une troisième pression maximale de la troisième chambre de pression (23).
